# EUROPEAN PATENT SPECIFICATION

(11) **EP 3 621 899 B1**
(45) Date of publication and mention of the grant of the patent: **28.06.2023**
(21) Application number: 18723465.3
(22) Date of filing: 07.05.2018
(51) Int. Cl.: B65G 1/04, B65G 1/06

(54) **A CONTAINER HANDLING VEHICLE**
EIN FAHRZEUG ZUR HANDHABUNG VON CONTAINERN
UN VÉHICULE POUR LA MANUTENTION DE CONTENEURS

(30) Priority: 08.05.2017 NO 20170754
(43) Date of publication of application: 18.03.2020
(73) Proprietor: Autostore Technology AS, 5578 Nedre Vats (NO)
(72) Inventor: FJELDHEIM, Ivar, 5533 Haugesund (NO); AUSTRHEIM, Trond, 5590 Etne (NO)
(74) Representative: Onsagers AS
(86) International application number: PCT/EP2018/061651
(87) International publication number: WO 2018/206478

(56) References cited:
- WO-A1-2015/019055
- WO-A1-2015/112665
- WO-A1-2016/120075
- GB-A- 1 326 304
- US-A1- 2012 006 765
- US-A1- 2015 309 511

## Description

### Technical Field

The present invention relates to a container handling vehicle for picking up storage containers in an automated storage and retrieval system.

### Background and prior art

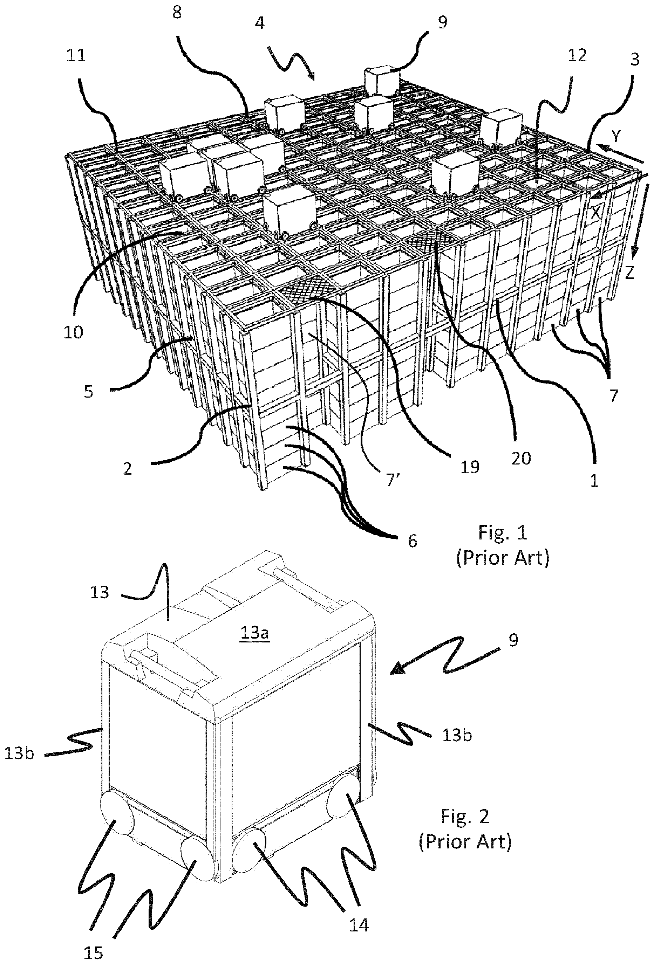

Fig. 1 discloses a framework structure 1 of a typical prior art automated storage and retrieval system and Fig. 2 discloses a container handling vehicle of such a system.

The framework structure 1 comprises a plurality of upright members 2 and a plurality of horizontal members 3, which are supported by the upright members 2. The members 2, 3 may typically be made of metal, e.g. extruded aluminum profiles.

The framework structure 1 defines a storage grid 4 comprising storage columns 5 arranged in rows, in which storage columns 5 storage containers 6, also known as bins, are stacked one on top of another to form stacks 7. Each storage container 6 may typically hold a plurality of product items (not shown), and the product items within a storage container 6 may be identical, or may be of different product types depending on the application. The framework structure 1 guards against horizontal movement of the stacks 7 of storage containers 6, and guides vertical movement of the containers 6, but does normally not otherwise support the storage containers 6 when stacked.

The horizontal members 3 comprise a rail system 8 arranged in a grid pattern across the top of the storage columns 5, on which rail system 8 a plurality of container handling vehicles 9 (also called remotely operated vehicles or robots) are operated to raise storage containers 6 from, and lower storage containers 6 into, the storage columns 5, and to transport the storage containers 6 above the storage columns 5. The rail system 8 comprises a first set of parallel rails 10 arranged to guide movement of the container handling vehicles 9 in a first direction X across the top of the frame structure 1, and a second set of parallel rails 11 arranged perpendicular to the first set of rails 10 to guide movement of the container handling vehicles 9 in a second direction Y, which is perpendicular to the first direction X. In this way, the rail system 8 defines grid columns 12 above which the container handling vehicles 9 can move laterally above the storage columns 5, i.e. in a plane which is parallel to the horizontal X-Y plane.

Each container handling vehicle 9 comprises a vehicle body 13 and first and second sets of drive wheels 14, 15 or rolling means which enable the lateral movement of the container handling vehicle 9, i.e. the movement in the X and Y directions. In Fig. 2 two drive wheels in each set are visible. The first set of drive wheels 14 is arranged to engage with two adjacent rails of the first set 10 of rails, and the second set of drive wheels 15 arranged to engage with two adjacent rails of the second set 11 of rails. Each set of drive wheels 14, 15 can be lifted and lowered, so that the first set of drive wheels 14 and/or the second set of drive wheels 15 can be engaged with the respective set of rails 10, 11 at any one time.

Each container handling vehicle 9 also comprises a lifting device (not shown) for vertical transportation of storage containers 6, e.g. raising a storage container 6 from, and lowering a storage container 6 into, a storage column 5. The lifting device comprises a gripping device (not shown) which is adapted to engage a storage container 6, which gripping device can be lowered from the vehicle body 13 so that the position of the gripping device with respect to the vehicle body 13 can be adjusted in a third direction Z, which is orthogonal the first direction X and the second direction Y.

Conventionally Z=1 identifies the uppermost layer of the grid 4, i.e. the layer immediately below the rail system 8, Z=2 the second layer below the rail system 8, Z=3 the third layer etc. In the prior art storage system disclosed in Fig. 1, Z=8 identifies the lowermost, bottom layer of the grid 4. Consequently, as an example and using the Cartesian coordinate system X, Y, Z indicated in Fig. 1, the storage container identified as 7' in Fig. 1 can be said to occupy grid location or cell X=10, Y=2, Z=3. The container handling vehicles 9 can be said to travel in layer Z=0, and each grid column can be identified by its X and Y coordinates.

Each container handling vehicle 9 comprises a storage compartment or space for receiving and stowing a storage container 6 when transporting the storage container 6 across the grid 4. The storage space may comprise a cavity arranged centrally within the vehicle body 13, e.g. as is described in WO2014/090684A1.

Alternatively, the container handling vehicles 9 may have a cantilever construction, as is described in NO3 17366.

The container handling vehicles 9 may have a footprint, i.e. an extension in the X and Y directions, which is generally equal to the lateral or horizontal extension of a grid column 12, i.e. the extension of a grid column 12 in the X and Y directions, e.g. as is described in WO2015/193278A1.

Alternatively, the container handling vehicles 9 may have a footprint which is larger than the lateral extension of a grid column 12, e.g. as is disclosed in WO2014/090684A1.

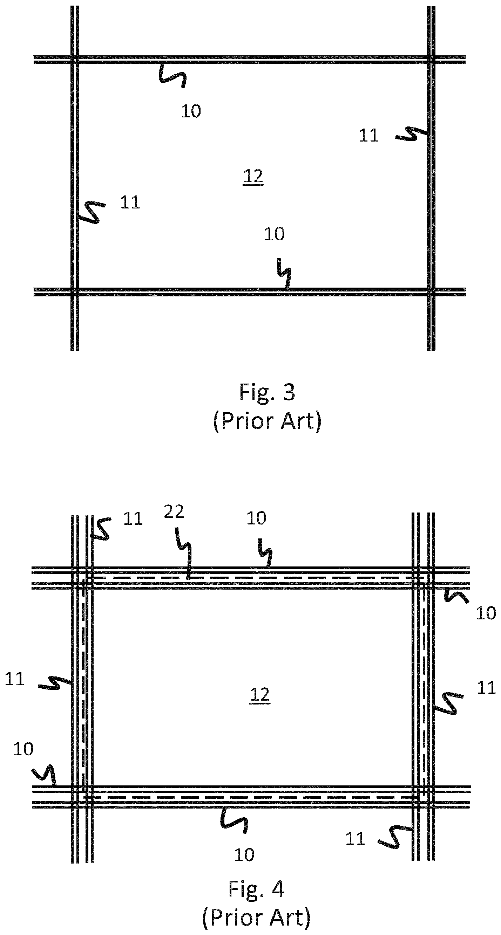

The rail system 8 may be a single rail system, as is shown in Fig. 3. Alternatively, the rail system 8 may be a double rail system, as is shown in Fig. 4, the latter allowing a container handling vehicle 9 having a footprint 22 generally corresponding to the lateral extension of a grid column 12 to travel along a row of grid columns even if another container handling vehicle 9 is positioned above a grid column neighboring that row. A third alternative is a rail system 8 having both a single rail system and a double rail system.

In a storage grid 4, a majority of the grid columns 12 are storage columns 5, i.e. grid columns where storage containers are stored in stacks. However, a grid normally has at least one grid column 12 which is used not for storing storage containers, but which comprises a location where the container handling vehicles 9 can drop off and/or pick up storage containers 6 so that they can be transported to an access station where the storage containers 6 can be accessed from outside of the grid 4 or transferred out of or into the grid 4. Within the art, such a location is normally referred to as a "port" and the grid column in which the port is located may be referred to as a port column 19,20.

The grid 4 in Fig. 1 comprises two port columns 19 and 20. The first port column 19 may for example be a dedicated drop-off port column where the container handling vehicles 9 can drop off storage containers 6 to be transported to an access or a transfer station (not shown), and the second port 20 column may be a dedicated pick-up port column where the container handling vehicles 9 can pick up storage containers 6 that have been transported to the grid 4 from an access or a transfer station. However, each port column 19 may be used as both drop-off and pick-up port columns.

The access station may typically be a picking or a stocking station where product items are removed from or introduced to the storage containers. In a picking or a stocking station, the storage containers are commonly not removed from the automated storage and retrieval system, but are returned into the grid once accessed. A port can also be used for transferring storage containers out of or into the grid, e.g. for transferring storage containers to another storage facility (e.g. to another grid or to another automated storage and retrieval system), to a transport vehicle (e.g. a train or a lorry), or to a production facility.

A conveyor system comprising conveyors is normally employed to transport the storage containers between the ports and the access station.

If the port and the access station are located at different levels, the conveyor system may comprise a lift device for transporting the storage containers vertically between the port and the access station.

The storage and retrieval procedure applying the above-mentioned container handling vehicles 9 has been described earlier. See for example WO 98/49075, WO 2013/167907 A1 and WO 2015/019055 A1.

In short, the general principles are as follows:
When a storage container 6 stored in the grid 4 disclosed in Fig. 1 is to be accessed, one of the container handling vehicles 9 is instructed to retrieve the target storage container 6 from its position in the grid 4 and transport it to the drop-off port 19. This operation involves moving the container handling vehicle 9 to a grid location above the storage column 5 in which the target storage container 6 is positioned, retrieving the storage container 6 from the storage column 5 using the container handling vehicle's 9 lifting device (not shown), and transporting the storage container 6 to the drop-off port 19. If the target storage container 6 is located deep within a stack 7, i.e. with one or a plurality of other storage containers 6 positioned above the target storage container 6, the operation also involves temporarily moving the abovepositioned storage containers 6 prior to lifting the target storage container 6 from the storage column 5. This step, which is sometimes referred to as "digging" within the art, may be performed with the same container handling vehicle 9 that is subsequently used for transporting the target storage container 6 to the drop-off port 19, or with one or a plurality of other cooperating container handling vehicles 9. Alternatively, or in addition, the automated storage and retrieval system may have container handling vehicles 9 specifically dedicated to the task of temporarily removing storage containers 6 from a storage column 5. Once the target storage container 6 has been removed from the storage column 5, the temporarily removed storage containers 6 can be repositioned into the original storage column 5. However, the removed storage containers 6 may alternatively be relocated to other storage columns 5.

When a storage container 6 is to be stored in the grid 4, one of the container handling vehicles 9 is instructed to pick up the storage container 6 from the pick-up port 20 and transport it to a grid location above the storage column 5 where it is to be stored. After any storage containers 6 positioned at or above the target position within the storage column stack have been removed, the container handling vehicle 9 positions the storage container 6 at the desired position. The removed storage containers 6 may then be lowered back into the storage column 5, or relocated to other storage columns 5.

For monitoring and controlling the automated storage and retrieval system the system comprises a computerized control system having a database keeping track of the storage containers 6.

The control system may for example monitor and control
A. the location of respective storage containers 6 within the grid 4,
B. the content of each storage container 6, and
C. the movement of the container handling vehicles 9,
for thereby ensuring that the desired storage container 6 can be delivered to the desired location at the desired time without the risk of collision between the operating container handling vehicles 9.

WO2016/120075 A1 discloses a container handling vehicle comprising a sensor and an encoder connected to one or both sets of drive wheels to allow angular position feedback during operation. The encoder enables conversion of the angular motion of the handling device to an analog or digital code, and thereby provides an accurate and reliable means for measuring and controlling the handling device's travelling distance. Fig. 8 in WO2016/120075 A1 shows an example of an encoder ring / shaft decoder located outside the drive wheel rotor.

WO2015/019055 A1 discloses a container handling vehicle according to the preamble of claim 1 and an automated storage and retrieval system according to the preamble of claim 6.

A problem associated with the known container handling vehicles is that one or more wheels may slip, causing a misreading of the angular position. Such misreading by the associated encoder may impede the operation of the automated storage and retrieval system, in particular when the system involves a high density of vehicles operating simultaneously onto the rail system. Furthermore, encoders connected to known container handling vehicles provide single readings only, thereby limiting the obtainable accuracy of the distance metering.

In view of the above, it is desirable to provide a container handling vehicle, and a method for operating a system using such container handling vehicles, that solve or at least mitigate the aforementioned problem related to acquisition of reliable distance metering of the vehicles.

### Summary of the invention

The present invention provides a container handling vehicle according to claim 1 and an automated storage and retrieval system according to claim 6. The dependent claims describe embodiments of the invention. The container handling vehicle comprises
- a vehicle body,
- first rolling means rotatably connected at least indirectly to the vehicle body and configured to move the vehicle along a first lateral direction (X),
- second rolling means rotatably connected to the vehicle body and configured to move the vehicle along a second lateral direction (Y) perpendicular to the first direction (X),
- a rolling means displacement system arranged to displace the first rolling means in a vertical direction (Z) perpendicular to the first and second lateral directions (X,Y) between a lowered position located lower than the vertical position of the second rolling means and a raised position located higher than the vertical position of the second rolling means,
- a first track wheel rotatably connected directly to the vehicle body, and/or indirectly to the vehicle body via for example the rolling means displacement system, the first track wheel having a rotational axis parallel to the second lateral direction (Y) and
- a first position measurement system for acquisition of angular positioning data thereof, the first position measurement system being either directly coupled to the first track wheel and/or indirectly coupled to the first track wheel via another rotational object engaging with the first track wheel.

The position measurement system may comprises an encoder rotatably arranged within the first track wheel and a non-rotatable track wheel sensor arranged in signal communication with the rotating encoder for reading encoder transmitting signals which contain annular positioning information / data of the first track wheel. The rotational connection of the first track wheel to the vehicle body may be achieved via inter alia a dedicated sensor support in which the track wheel sensor is arranged. Acquisition of angular position data includes any acquisition that may provide information concerning each vehicle's linear transport distance from an initial position on the grid during operation.

Consequently, according to the invention the reliability of the distance measurement of the container handling vehicles is improved due to additional angular position measurements from co-working track wheels since any misreading of encoders coupled to the rolling means are compensated by parallel readings from the one or more track wheels. Furthermore, if both readings are working as intended, a synchronization of the angular position measurements from the rolling means and the track wheel may improve the accuracy of the angular positioning data. Note that measurement of angular positioning data from the track wheel alone is also feasible. The above-mentioned advantages over the prior art may be achieved when the track wheel is rotating as a function of the velocity of the vehicle. Such rotation is achieved by aligning the vertical positions of the rolling means and the track wheel such that both are contacting the underlying three-dimensional grid when the rolling means is in the low position, when the lowermost part of the track wheel is aligned with the lowermost part of its/their respective rolling means during use of the track wheel. In an alternative embodiment, the track wheel may achieve such a vehicle velocity dependent rotation by meshing with their respective rolling means.

To activate and deactivate the operation of the first track wheel, it is vertically displaceable relative to the vehicle body. Such vertical displacement is achieved by rotatably connecting the first track wheel to the rolling means displacement system. That latter configuration ensures that the track wheel obtains the same vertical displacement as the respective rolling means. If the track wheel is rotationally attached to a dedicated sensor support, the configuration may be achieved by connecting the sensor support non-rotatably to the rolling means displacement system. The shape of the sensor support may be elongated having one longitudinal end rotatably connected at an axis of rotation of the respective track wheel and the other longitudinal end connected, preferably non-rotatably, to the vehicle body / rolling means displacement system.

Further, the container handling vehicle also includes one or more second track wheels which are rotatably connected at least indirectly to the vehicle body with a rotational axis parallel to the first direction (X). The second track wheel is coupled to a second positioning measurement system for acquisition of angular positioning data, and/or acquisition of the number of revolutions per time unit, in the same manner as for the first track wheel. Thus, the second positioning measurement system is identical to the first position measurement system. As for the first track wheel, the rotation of the second track wheel is achieved by aligning the vertical positions of the second rolling means and the second track wheel such that both are contacting the underlying three-dimensional grid when the second rolling means is in the low position, when the lowermost part of the second track wheel is aligned with the lowermost part of the second rolling means during use of the track wheel.

The first rolling means comprise two pairs of drive wheels arranged on opposing sides of the vehicle body, ensuring movement in the X direction, while the second rolling means comprise two pairs of drive wheels arranged on opposing sides of the vehicle body and with rotational axis perpendicular to the drive wheels of the first rolling means, ensuring movement in the Y direction.

Furthermore, the track wheel(s) is/are arranged between the drive wheels of at least one of the two first pairs of drive wheels.

As mentioned above, registration of angular positions of the first and/or second rolling means, in addition to the registration of angular positions of the first and/or second track wheel(s), may be advantageous to improve the distance measurement of each vehicle. Such registration may be achieved by use of yet another position measurement system coupled to the respective rolling means. This rolling means connected measurement system may be identical to the first and/or second measurement system. Alternatively, the angular positioning data acquisitions may be performed on the rolling means only.

The container handling vehicle is provided with a space for receiving a storage container in form of a cavity arranged centrally within the vehicle body and open towards the underlying three-dimensional grid. The size of the cavity is such that the maximum sized storage container intended to be picked up from an underlying three-dimensional grid may be received there within. Such a centrally arranged cavity is disclosed in WO2014/090684 A1, WO2015/193278 A1 and WO2015/019055 A1.

A plurality of the above-mentioned container handling vehicles form part of an automated storage and retrieval system. The system according to the invention includes a three-dimensional grid comprising a plurality of storage columns configured to store storage containers one on top of another in vertical stacks. The plurality of container handling vehicles is arranged on top of the grid, where each vehicle is suitable for retrieving storage containers from, and storing storage containers in, the storage columns, and for transporting the storage containers horizontally across the grid.

In the following description, numerous specific details are introduced by way of example only to provide a thorough understanding of embodiments of the claimed vehicle and system.

One skilled in the relevant art, however, will recognize that these embodiments can be practiced without one or more of the specific details, or with other components, configurations, etc., as long as said embodiments fall ithin the scope of the claims. In other instances, well-known structures or operations are not shown, or are not described in detail, to avoid obscuring aspects of the disclosed embodiments.

### Brief description of the drawings

Following drawings are appended to facilitate the understanding of the invention.
Fig. 1 is a perspective view of a prior art automated storage and retrieval system with a plurality of container handling vehicles.
Fig. 2 is a perspective view of a prior art container handling vehicle.
Fig. 3 is a top view of a prior art single rail grid.
Fig. 4 is a top view of a prior art double rail grid.
Fig. 5 (A) and (B) show perspective views from two different angles of a container handling vehicle according to a first embodiment of the invention.
Fig. 6 is a perspective exploded view of the second set of wheels of the container handling vehicle of fig. 5.
Fig. 7 is a perspective exploded view showing an example configuration of a track wheel according to the invention.
Fig. 8 (A) and (B) shows a track wheel according to the invention, wherein Fig. 8 (A) shows a side view of the track wheel and Fig. 8 (B) shows a sectional drawing of the track wheel along section A-A.
Fig. 9 (A) and (B) show perspective views from two different angles of a container handling vehicle according to a second embodiment of the invention.
Fig. 10 (A)-(D) are side views of the container handling vehicle of Fig. 9 seen from all sides..
Fig. 11 is a perspective view of the container handling vehicle of Figs. 9 and 10 arranged on a double tracked storage grid, directly above a grid column.

### Detailed description of the invention

The embodiments of the invention will be discussed in more detail with reference to the appended drawings. It should be understood, however, that the drawings are not intended to limit the invention to the subject-matter depicted in the drawings.

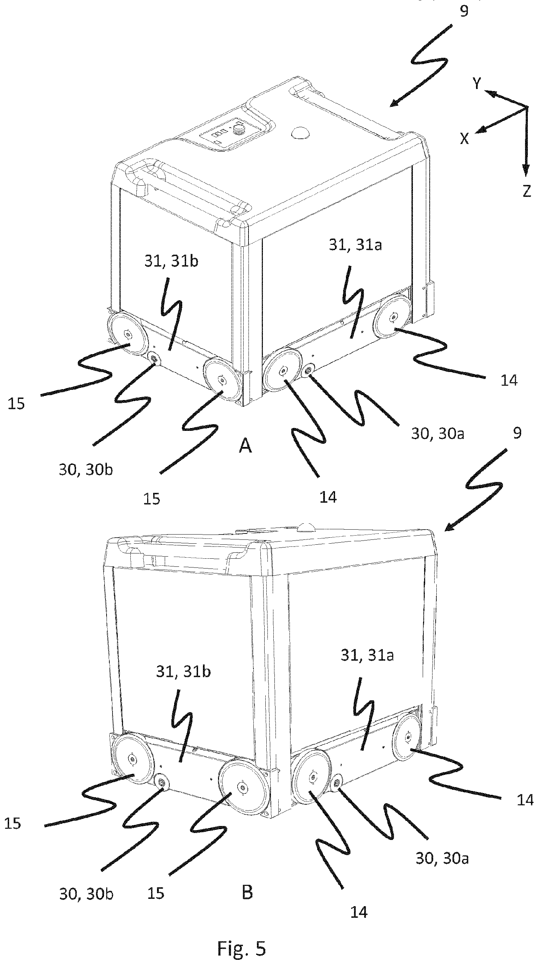

As for the prior art vehicle shown in Fig. 2 the container handling vehicle 9 of a first embodiment of the invention shown in Fig. 5 comprises a vehicle body 13 constituting a vehicle framework onto which a first and a second set of drive wheels 14, 15 are attached. The first and second set of drive wheels 14,15 enable lateral movement of the container handling vehicle 9 in the X and Y directions, respectively.

The vehicle body 13 comprises a top part / lid 13a as well as the framework of the vehicle 9, including upright members 13b located in all four corners of the vehicle 9. The first set of drive wheels 14 comprises two wheel pairs arranged to engage with two adjacent rails of the first set 10 of rails (X direction). Similarly, the second set of drive wheels 15 comprises two wheel pairs arranged to engage with two adjacent rails of the second set 11 of rails (Y direction). One or each set of drive wheels 14, 15 can be lifted and lowered relative to each other, so that the first set of drive wheels 14 or the second set of drive wheels 15 can be engaged with their respective set of rails 10, 11 at any one time. The first and second sets 14,15 thus constitute in total eight drive wheels which in Fig. 5 are illustrated arranged at or near each of the lower corners of the vehicle 9. The drive wheels 14,15 may however be arranged further away from the lower corners of the vehicle 9 as long the primary function of the vehicle 9 is not jeopardized, that is to enable transportation and handling of storage containers on a three-dimensional grid 4.

The vehicle 9 in accordance with the invention also includes two track wheels 30,30a,30b, where a first track wheel 30a is arranged between two drive wheels of one of the wheel pairs in the first set of drive wheels 14 and a second track wheel 30b is arranged between two drive wheels of one of the wheel pairs in the second set of drive wheels 15. The position of each track wheel 30,30a,30b are seen in Fig. 5 to be in horizontal alignment with their respective drive wheels to ensure contact with a common rail. The term "respective drive wheels" signifies drive wheels having a rotational axis that is aligned with the rotational axis of the track wheel.

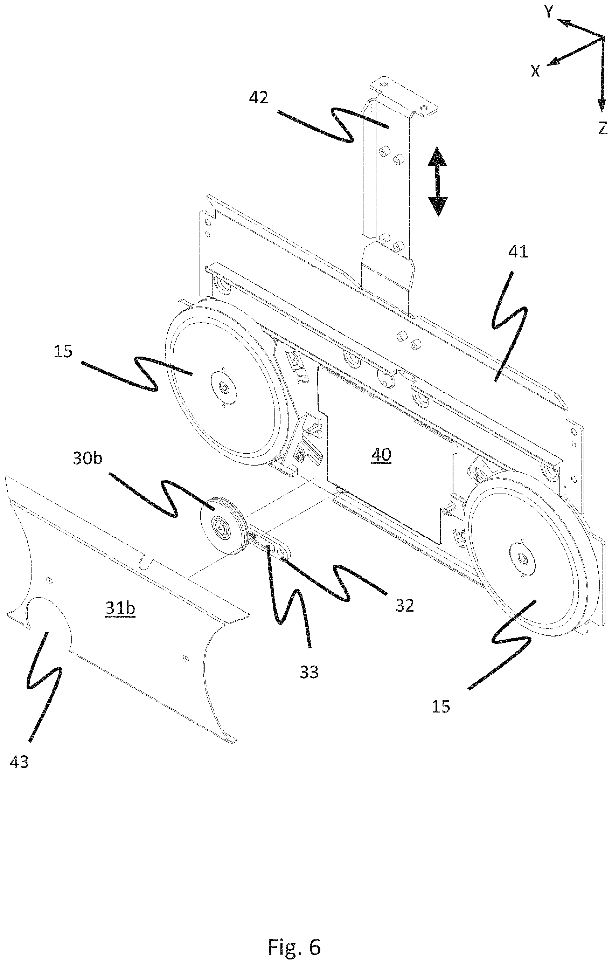

In Fig. 6 the lower section of the vehicle 9 orientated along the Y direction is illustrated in a partly exploded view. The track wheel 30b is rotatably fixed to a track wheel arm 32 containing a track wheel sensor 33, for example of a type such as a printed circuit board (PCB) sensor. The track wheel arm 32 is fixed to a back plate 41 containing the drive wheels 15 and power electronics 40 distributing power to the drive wheels 15. The connection of the track wheel arm 32 to the back plate 41 is preferably rigid. However, in alternative configurations of the inventive vehicle some pivot movements of the track wheel arm 32 relative to the back plate 41 may be envisaged. For example, the track wheel or track wheels may be pivoted against a bias to ensure that the track wheel is continuously contacting the underlying rail even during crossing over undesired irregularities / unevenness on the rail such as lumps or bumps from debris. Such a bias configuration may be a track wheel connected trailing arm suspension or any configuration in which the track wheel is biased towards the rail, for example resilient material(s), spring(s) plunger(s), hydraulic cylinder(s) etc. The risk of false / inaccurate measurements is thereby reduced or removed. The alternative configurations of the track wheels biased to the rails is example of a configuration where lifting of one or more of the track wheels becomes optional. In particular for the latter bias configuration it may be beneficial to at least partly cover one or more of the track wheels to provide a good frictional contact with the rail, for example by providing rubberized coating on the track wheel.

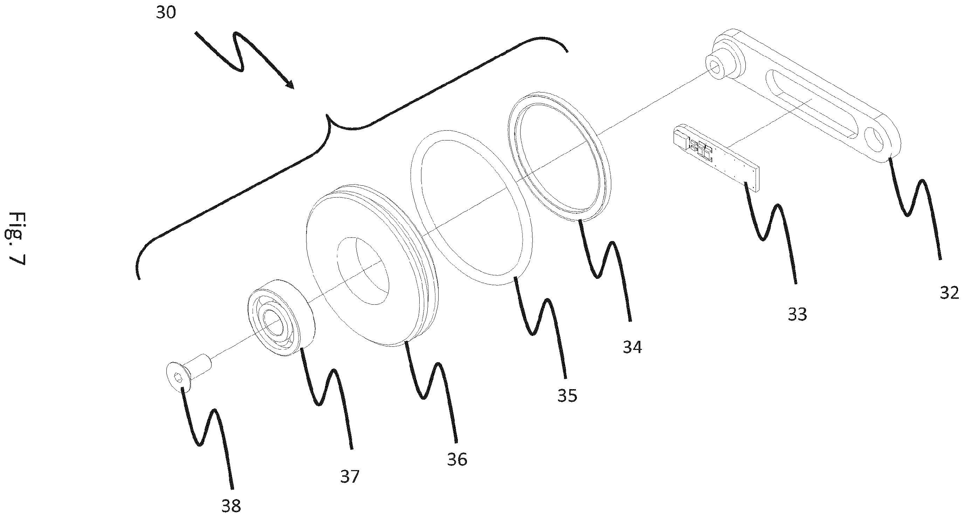

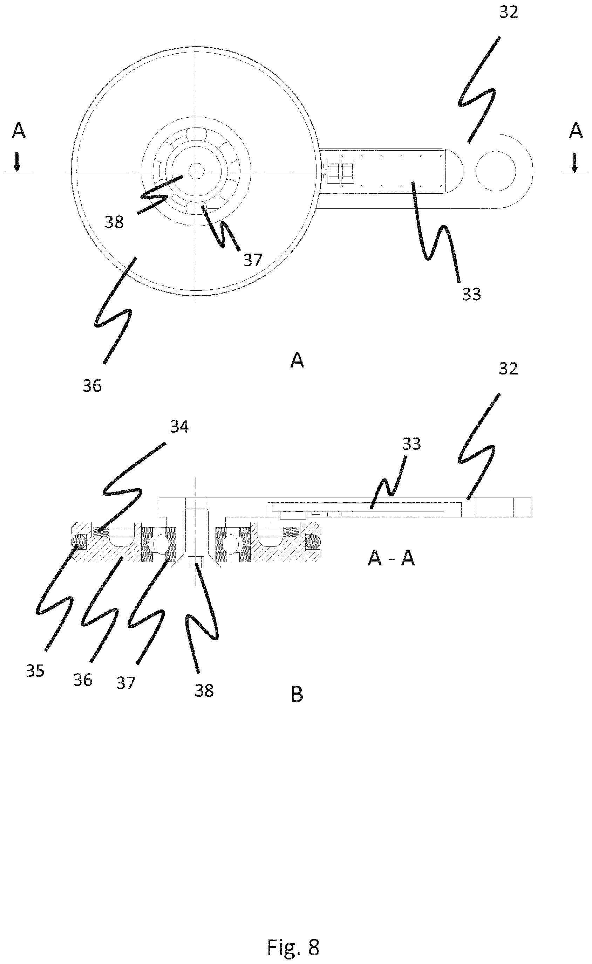

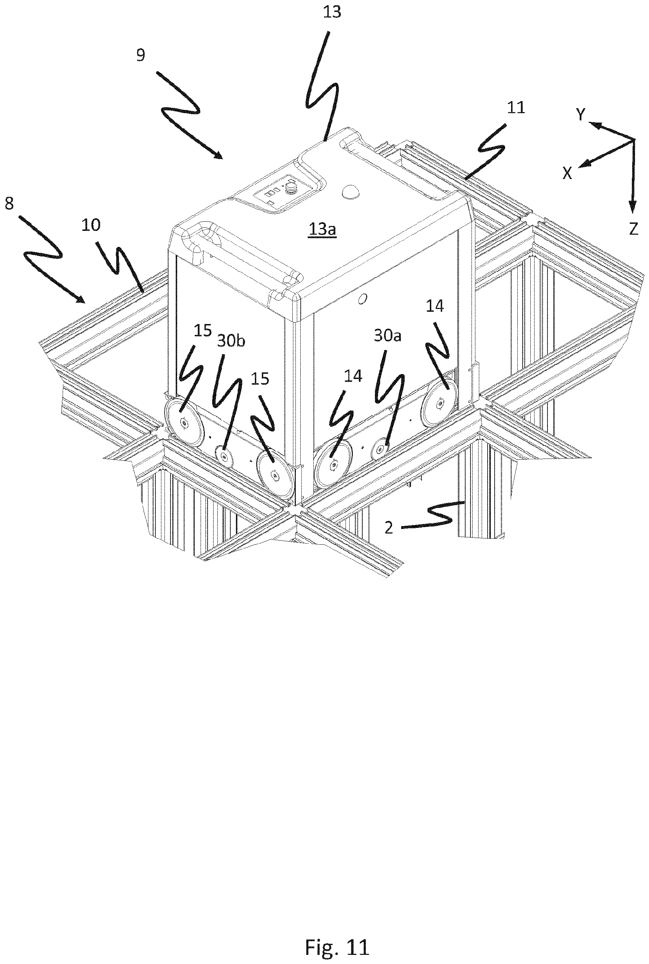

As is apparent from Figs. 7 and 8, and in particular Fig. 8 B, the track wheel sensor 33 receives signals from an encoder ring 34, for example a magnetized encoder ring, arranged within a frame 36 of the track wheel 30b. A ball bearing 37 and a center screw 38 ensures rotational coupling of the track wheel 30b to the track wheel arm 32. The assembly comprising the encoder ring 34 and the track wheel sensor 33 constitutes a position measurement system enabling accurate angular readings of the track wheel 30b and thus accurate positioning measurements of the vehicle 9 when in rotational contact with the underlying rail (see Fig. 11) and/or in mesh with the respective drive wheel 14,15.

The encoder ring 34 may be of a type such as an absolute encoder, i.e. acquiring a unique code for each annular position (i.e., every position is distinctive) and/or incremental (relative) encoder, i.e. an encoder that produces digital pulses in response to mechanical displacement. The absolute encoder may be of a type such as an absolute rotary encoder such as a mechanical encoder, an optical encoder, a magnetic encoder or a capacitive encoder. Specific examples of position measurement systems are rotary absolute encoders, off-axis rotary absolute encoders and magnetic ring encoder systems manufactured by RLS^{®}.

Covers 31,31a,31b covering at least the power electronics 40 between the drive wheels 14,15 are in Figs. 5 and 6 shown fixed to the back plate 41. To allow visual observation of the track wheel rotation, the covers 31 in Figs. 5 and 6 are provided with a dedicated track wheel opening 43.

Fig. 6 shows an elongated plate 42 fixed at a lower end to the upper part of the back plate 41. The opposite end of the plate 42 is coupled to a lifting means configured to vertical displace the elongated plate 42 and the back plate 41, and consequently all elements attached to the back plate 41, including the drive wheels 15, the power electronics 40 and the track wheel 30b. The back plate 41 and the elongated plate 42 hence constitutes a displacement system enabling lifting/lowering of the drive wheels 14,15 from/to the underlying rails 10,11, and thereby allowing change of direction of the container handling vehicle 9 between X direction and Y direction.

Single components such as the track wheels 30b may be displaced by other vertical displacement means. Alternatively, one or more of the track wheels 30,30a,30b may be connected to the vehicle body 13 such that the vertical position is automatically adjusted when physical hindrances are detected / impacted during vehicle movements.

Note that the same or similar position measurement system may be used as an alternative means, or an additional means, for positioning measurement of the drive wheels, that is, using a system comprising an encoder ring surrounding the center of one or more drive wheels and a wheel sensor reading the output signal of the encoder ring, thereby determining the wheel's angular position and/or number of revolutions of the wheel per time unit. Any sensor support would, as described above, be fixed to the vehicle body 13 and/or the displacement system 41,42 and arranged such that the wheel sensor 33 is arranged in signal communication with the encoder ring 34 within the drive wheel 14,15 for reading annular positional data therefrom.

The following configurations for measuring the position of container handling vehicles 9 may be envisaged:
A) The desired positioning measurements are obtained by a first and second track wheel position measurement system coupled to corresponding track wheels as defined the independent claims. Each track wheel is configured either to mesh (directly or indirectly) with its respective drive wheel 14,15 or to establish contact (directly or indirectly) with the underlying rails 10,11 or a combination thereof.
B) The desired position measurements are obtained by a dual position measurement system combining the use of a drive wheel position measurement system and said track wheel position measurement systems mentioned above.

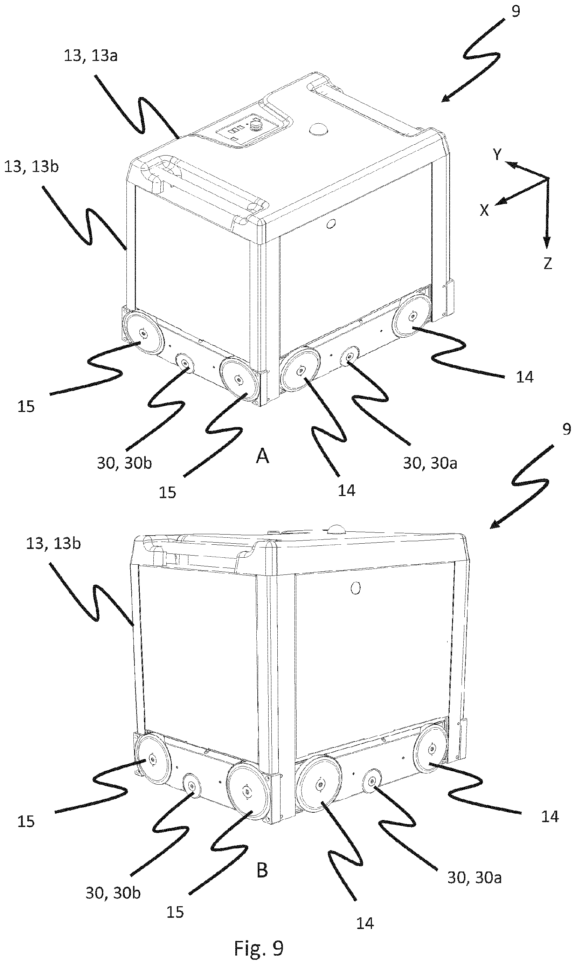

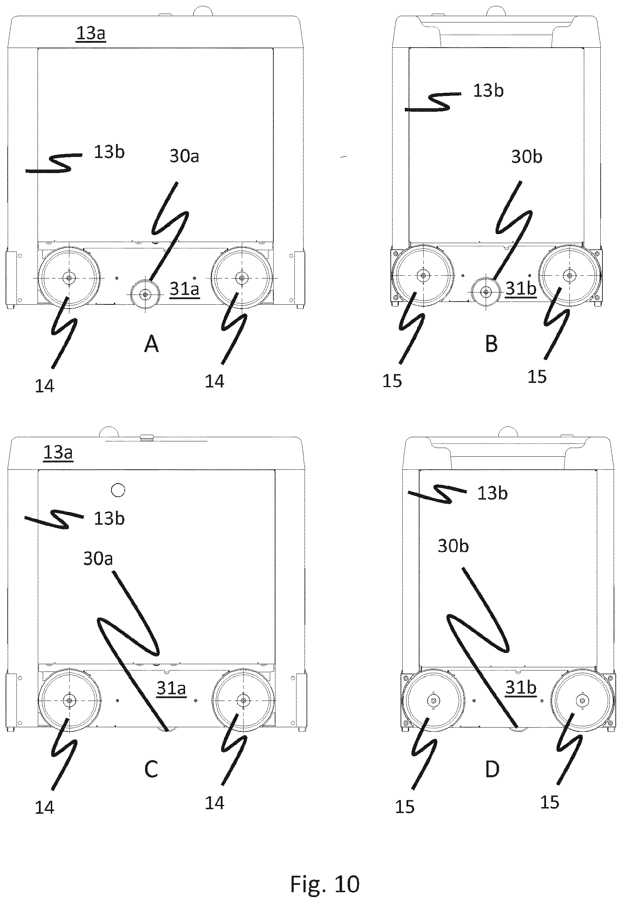

Figs. 9-11 show a container handling vehicle 9 according to a second embodiment of the invention, where the track wheels 30,30a,30b are, compared to the first embodiment (Figs. 5-8), shifted more towards the mid position between the two wheels of each pair in the drive wheel sets 14,15. In general, the horizontal positions (X,Y) of the track wheels 30 may be anywhere on the vehicle 9 as long as they are configured to allow at least indirect rotational contact with its respective drive wheel and/or the underlying rails 10,11. For example, the track wheel(s) may be arranged anywhere within each pair of the drive wheel sets 14,15 or between pairs of the first 14 and second 15 drive wheel set (such as at or near the lower corners of the vehicle 9) or a combination thereof.

The container handling vehicles 9 comprise a centrally located storage space for receiving and stowing a storage container 6 as disclosed in WO2014/090684A1, and advantageously each of these vehicles 9 have a footprint 22, i.e. extension in the X and Y directions, which is generally equal to the horizontal extension of a grid column 12. This design will allow a container handling vehicle 9 to transport a storage container 6 above a row of grid columns 12 even if another container handling vehicle 9 occupies a location above a grid column neighboring the grid column row along which the first container handling vehicle 9 is traveling.

The vehicles 9 illustrated for the first and second embodiments are both of the latter type, that is, vehicles with a centrally located storage space and a footprint 22 equal to the horizontal extension of a grid column 12. Fig. 11 illustrates a container handling vehicle 9 of the second embodiment arranged on a double track rail system 8 directly above a grid column 12.

The distance measuring of each vehicle may for example depend on acquisition of angular positioning data using any of the position measurement systems described above in combination with one or more optical sensors registering the actual position of the vehicle above the three-dimensional grid. When an initial location is known, for example exactly above a certain grid column 12, the position measurement systems keep track on any locations relative to that initial location since the size of the grid columns throughout the entire grid is known.

However, rail directed optical sensors are not essential for remotely positioning a vehicle to a predefined location above the grid. For example, to align a vehicle directly above a grid column (as shown in Fig. 11), the set of drive wheels being in a raised position is lowered partly or fully down, for example 10 mm. The vehicle is then moved slowly forward until the partly or fully lowered wheels contact / engage the closest traversing rail in the moving direction. The drive wheels are then raised up to its raised position, and the position of the vehicle is offset based on the acquired engaging position and the known dimension of the grid such that the vehicle is positioned directly above the storage column. Of course, any position relative to the underlying grid may be obtained by this method

A recover of the vehicle position relative to the underlying grid is necessary only in the situation that the vehicle's initial position is lost.

In the preceding description, various aspects of a container handling vehicle and an automated storage and retrieval system according to the invention have been described with reference to the illustrative embodiment. However, this description is not intended to be construed in a limiting sense. The scope of the invention is defined by the following claims.

### Reference numerals:

- 1: Storage system / framework structure
- 2: Upright member (of framework structure)
- 3: Horizontal member (of framework structure)
- 4: Storage grid / three-dimensional grid
- 5: Storage column
- 6: Storage container
- 7: Stack (of storage containers)
- 8: Rail system
- 9: Container handling vehicle / robot
- 10: First set of rails (X direction)
- 11: Second set of rails (Y direction)
- 12: Grid column
- 13: Vehicle body
- 13a: Lid (of vehicle body)
- 13b: Upright member (of vehicle body)
- 14: First rolling means / first rolling device / first set of drive wheels (X direction)
- 15: Second rolling means / fecond rolling device / second set of drive wheels (Y direction)
- 19: First port column / drop-off port
- 20: Second port column / pick-up port
- 22: Footprint
- 30: Track wheel
- 30a: First track wheel (X direction)
- 30b: Second track wheel (Y direction)
- 31: Cover for power electronics
- 31a: First cover for power electronics (X direction)
- 31b: Second cover for power electronics (Y direction)
- 32: Track wheel arm linked to track wheel / sensor support
- 33: Track wheel sensor
- 34: Encoder / encoder disk / rotary encoder / shaft encoder
- 35: Gasket / rubber gasket
- 36: Track wheel frame
- 37: Rotational means / rotating device / bearing / ball bearing
- 38: Fastening means (for fastening track wheel to track wheel arm) / fastening device / center screw
- 40: Power electronics (for operation of drive wheels and track wheels)
- 41: Back plate for wheel set
- 42: Elongated plate / lifting handle (for lifting of wheels)
- 43: Track wheel opening

## Claims

1. A container handling vehicle (9) for handling storage containers in an automated storage and retrieval system, comprising
a vehicle body (13),
a cavity arranged centrally within the vehicle body (13), the cavity being configured to receive and fully enclose a maximum sized storage container (6) intended to be picked up from an underlying three-dimensional grid (4),
first rolling means (14) comprising two first pairs of drive wheels arranged on opposing sides of, and rotatably connected to, the vehicle body (13) and configured to move the vehicle (9) along a first lateral direction (X),
second rolling means (15) comprising two second pairs of drive wheels arranged on opposing sides of, and rotatably connected to, the vehicle body (13) and configured to move the vehicle (4) along a second lateral direction (Y), the second direction (Y) being perpendicular to the first direction (X), and
a rolling means displacement system (41,42) arranged to displace the first rolling means (14) in a vertical direction (Z) perpendicular to the first and second lateral directions (X,Y), between a lowered position located lower than the vertical position of the second rolling means (15) and a raised position located higher than the vertical position of the second rolling means (15),
**characterized in that** the container handling vehicle (9) further comprises
a first track wheel (30a) rotatably connected to the rolling means displacement system (41,42), having a rotational axis parallel to the second lateral direction (Y), such that a lowermost part of the first track wheel (30a) is at any time aligned with a lowermost part of the first rolling means (14) during use, and
a first position measurement system (33,35) at least indirectly coupled to the first track wheel (30a) for acquisition of angular positioning data thereof, and
a second track wheel (30b) rotatably connected to the vehicle body (13) with a rotational axis parallel to the first direction (X), such that a lowermost part of the second track wheel (30b) is at any time aligned with a lowermost part of the second rolling means (15) during use and
a second position measurement system (33,35) coupled to the second track wheel (30a) for acquisition of angular positioning data thereof,
wherein the first track wheel (30a) is arranged between the drive wheels of at least one of the two first pairs of drive wheels and the second track wheel (30b) is arranged between the drive wheels of at least one of the two second pairs of drive wheels, and
each of the first and second positioning measurement system comprises
an encoder (34) rotatably arranged within the first and second track wheel (30a,30b), respectively, and a track wheel sensor (33) arranged in signal communication with the encoder (34) for reading encoder transmitting signals containing annular positioning data of the respective first and second track wheel (30a,30b).

2. The container handling vehicle (9) in accordance with claim 1, **characterized in that** the container handling device (9) is configured such that the first track wheel (30a) is vertically displaceable relative to the second rolling means (15).

3. The container handling vehicle (9) in accordance with claim 1, **characterized in that** the first track wheel (30a) is rotatably connected to the rolling means displacement system (41,42) via a sensor support (32) in which the track wheel sensor (33) is arranged.

4. The container handling vehicle (9) in accordance with claim 3, **characterized in that** the sensor support (32) has an elongated shape having one longitudinal end rotatably connected at the axis of rotation of the first track wheel (30a) and the other longitudinal end at least indirectly connected to the vehicle body (13).

5. The container handling vehicle (9) in accordance with any one of the preceding claims, **characterized in that** a third position measurement system is coupled to at least one of the first rolling means (14) and the second rolling means (15) for acquisition of angular position data thereof.

6. An automated storage and retrieval system comprising:
a three-dimensional grid (4) comprising a plurality of storage columns (5) configured to store storage containers (6) one on top of another in vertical stacks (7), and
a plurality of container handling vehicles (9) arranged on the three-dimensional grid (4) for retrieving storage containers (6) from, and storing storage containers (6) in, the storage columns (5), and for transporting the storage containers (6) horizontally across the grid (4), wherein each container handling vehicle (9) comprises
a vehicle body (13),
a cavity arranged centrally within the vehicle body (13), the cavity being configured to receive and fully enclose a maximum sized storage container (6) intended to be picked up from the underlying three-dimensional grid (4),
first rolling means (14) comprising two first pairs of drive wheels arranged on opposing sides of, and rotatably connected to, the vehicle body (13) and configured to move the vehicle (9) along a first lateral direction (X) on the three-dimensional grid (4),
second rolling means (15) comprising two second pairs of drive wheels arranged on opposing sides of, and rotatably connected to, the vehicle body (13) and configured to move the vehicle (4) along a second lateral direction (Y) on the three-dimensional grid (4), the second lateral direction (Y) being perpendicular to the first lateral direction (X), and
a rolling means displacement system (41,42) arranged to displace the first rolling means (14) in a vertical direction (Z) perpendicular to the first and second lateral directions (X,Y) between a low position relative to the vertical position of the second rolling means (15) where the first rolling means (14) are contacting the underlying three-dimensional grid (4) and a raised position relative to the vertical position of the second rolling means (15) where the second rolling means (15) are contacting the underlying three-dimensional grid (4),
**characterised in that** each container handling vehicle (9) further comprises
a first track wheel (30a) rotatably connected to the rolling means displacement system (41,42), having a rotational axis parallel to the second lateral direction (Y), such that a lowermost part of the first track wheel (30a) is at any time aligned with a lowermost part of the first rolling means (14) during use, and
a first position measurement system (33,35) at least indirectly coupled to the first track wheel (30a) for acquisition of angular positioning data thereof, and
a second track wheel (30b) rotatably connected to the vehicle body (13) with a rotational axis parallel to the first direction (X), such that a lowermost part of the second track wheel (30b) is at any time aligned with a lowermost part of the second rolling means (15) during use and
a second position measurement system (33,35) coupled to the second track wheel (30a) for acquisition of angular positioning data thereof,
wherein the first track wheel (30a) is arranged between the drive wheels of at least one of the two first pairs of drive wheels and the second track wheel (30b) is arranged between the drive wheels of at least one of the two second pairs of drive wheels, and
each of the first and second positioning measurement system comprises
an encoder (34) rotatably arranged within the first and second track wheel (30a,30b), respectively, and a track wheel sensor (33) arranged in signal communication with the encoder (34) for reading encoder transmitting signals containing annular positioning data of the respective first and second track wheel (30a,30b).

7. The automated storage and retrieval system in accordance with claim 6, **characterized in that** the vertical position of the first rolling means (14) and the first track wheel (30a) are aligned such that both are contacting the underlying three-dimensional grid (4) when the first rolling means (14) is in the low position.

8. The automated storage and retrieval system in accordance claims 6 or 7, **characterized in that** each container handling vehicle (9) is in accordance with any one of claims 2-5.

## Patentansprüche

1. Behälterhandhabungsfahrzeug (9) zum Handhaben von Lagerbehältern in einem automatisierten Lager- und Entnahmesystem, umfassend
einen Fahrzeugaufbau (13),
einen Hohlraum, der mittig in dem Fahrzeugaufbau (13) angeordnet ist, wobei der Hohlraum dafür ausgelegt ist, einen Lagerbehälter (6) maximaler Größe, der von einem darunterliegenden dreidimensionalen Gitter (4) aufgegriffen werden soll, aufzunehmen und vollständig zu umschließen,
erste Rollmittel (14), die zwei erste Paare von Antriebsrädern umfassen, die auf gegenüberliegenden Seiten des Fahrzeugaufbaus (13) angeordnet sind und drehbar mit diesem verbunden sind und dafür ausgelegt sind, das Fahrzeug (9) entlang einer ersten seitlichen Richtung (X) zu bewegen,
zweite Rollmittel (15), die zwei zweite Paare von Antriebsrädern umfassen, die auf gegenüberliegenden Seiten des Fahrzeugaufbaus (13) angeordnet sind und drehbar mit diesem verbunden sind und dafür ausgelegt sind, das Fahrzeug (4) entlang einer zweiten seitlichen Richtung (Y) zu bewegen, wobei die zweite Richtung (Y) senkrecht zu der ersten Richtung (X) ist, und
ein Rollmittelverschiebungssystem (41, 42), das so angeordnet ist, dass die ersten Rollmittel (14) in einer vertikalen Richtung (Z), die senkrecht zu der ersten und der zweiten seitlichen Richtung (X, Y) ist, zwischen einer abgesenkten Position, die tiefer als die vertikale Position der zweiten Rollmittel (15) liegt, und einer angehobenen Position, die höher als die vertikale Position der zweiten Rollmittel (15) liegt, verschoben werden,
**dadurch gekennzeichnet, dass** das Behälterhandhabungsfahrzeug (9) ferner Folgendes umfasst:
ein erstes Spurrad (30a), das drehbar mit dem Rollmittelverschiebungssystem (41, 42) verbunden ist, eine Drehachse aufweist, die parallel zu der zweiten seitlichen Richtung (Y) ist, sodass ein unterster Teil des ersten Spurrads (30a) während des Gebrauchs zu jeder Zeit auf einen untersten Teil der ersten Rollmittel (14) ausgerichtet ist, und
ein erstes Positionsmesssystem (33, 35), das wenigstens indirekt mit dem ersten Spurrad (30a) gekoppelt ist, um dessen Winkelpositionsdaten zu erfassen, und
ein drehbar mit dem Fahrzeugaufbau (13) verbundenes zweites Spurrad (30b) mit einer Drehachse, die parallel zu der ersten Richtung (X) ist, sodass ein unterster Teil des zweiten Spurrads (30b) während des Gebrauchs zu jeder Zeit auf einen untersten Teil der zweiten Rollmittel (15) ausgerichtet ist, und
ein zweites Positionsmesssystem (33, 35), das mit dem zweiten Spurrad (30a) gekoppelt ist, um dessen Winkelpositionsdaten zu erfassen,
wobei das erste Spurrad (30a) zwischen den Antriebsrädern von wenigstens einem der zwei ersten Paare von Antriebsrädern angeordnet ist und das zweite Spurrad (30b) zwischen den Antriebsrädern von wenigstens einem der zwei zweiten Paare von Antriebsrädern angeordnet ist, und
jedes von dem ersten und dem zweiten Positionsmesssystem einen Codierer (34), der drehbar in dem ersten bzw. dem zweiten Spurrad (30a, 30b) angeordnet ist, und einen Spurradsensor (33) umfasst, der in Signalkommunikation mit dem Codierer (34) angeordnet ist, um Codiererübertragungssignale zu lesen, die Ringpositionsdaten des jeweiligen ersten und zweiten Spurrads (30a, 30b) enthalten.

2. Behälterhandhabungsfahrzeug (9) nach Anspruch 1, **dadurch gekennzeichnet, dass** die Behälterhandhabungsvorrichtung (9) derart ausgestaltet ist, dass das erste Spurrad (30a) relativ zu den zweiten Rollmitteln (15) vertikal verschiebbar ist.

3. Behälterhandhabungsfahrzeug (9) nach Anspruch 1, **dadurch gekennzeichnet, dass** das erste Spurrad (30a) über einen Sensorträger (32), in dem der Spurradsensor (33) angeordnet ist, drehbar mit dem Rollmittelverschiebungssystem (41, 42) verbunden ist.

4. Behälterhandhabungsfahrzeug (9) nach Anspruch 3, **dadurch gekennzeichnet, dass** der Sensorträger (32) eine längliche Form aufweist, deren eines Längsende drehbar mit der Drehachse des ersten Spurrads (30a) verbunden ist und deren anderes Längsende wenigstens indirekt mit dem Fahrzeugaufbau (13) verbunden ist.

5. Behälterhandhabungsfahrzeug (9) nach einem der vorhergehenden Ansprüche, **dadurch gekennzeichnet, dass** ein drittes Positionsmesssystem mit wenigstens einem von den ersten Rollmitteln (14) und den zweiten Rollmitteln (15) gekoppelt ist, um deren Winkelpositionsdaten zu erfassen.

6. Automatisiertes Lager- und Entnahmesystem, umfassend:
ein dreidimensionales Gitter (4), umfassend eine Vielzahl von Lagersäulen (5), die dafür ausgelegt sind, Lagerbehälter (6) in vertikalen Stapeln (7) übereinander zu lagern, und
eine Vielzahl von Behälterhandhabungsfahrzeugen (9), die auf dem dreidimensionalen Gitter (4) angeordnet sind, um Lagerbehälter (6) aus den Lagersäulen (5) zu entnehmen und Lagerbehälter (6) darin zu lagern und um die Lagerbehälter (6) horizontal über das Gitter (4) zu transportieren, wobei jedes Behälterhandhabungsfahrzeug (9) Folgendes umfasst:
einen Fahrzeugaufbau (13),
einen Hohlraum, der mittig in dem Fahrzeugaufbau (13) angeordnet ist, wobei der Hohlraum dafür ausgelegt ist, einen Lagerbehälter (6) maximaler Größe, der von dem darunterliegenden dreidimensionalen Gitter (4) aufgegriffen werden soll, aufzunehmen und vollständig zu umschließen,
erste Rollmittel (14), die zwei erste Paare von Antriebsrädern umfassen, die auf gegenüberliegenden Seiten des Fahrzeugaufbaus (13) angeordnet sind und drehbar mit diesem verbunden sind und dafür ausgelegt sind, das Fahrzeug (9) entlang einer ersten seitlichen Richtung (X) auf dem dreidimensionalen Gitter (4) zu bewegen,
zweite Rollmittel (15), die zwei zweite Paare von Antriebsrädern umfassen, die auf gegenüberliegenden Seiten des Fahrzeugaufbaus (13) angeordnet sind und drehbar mit diesem verbunden sind und dafür ausgelegt sind, das Fahrzeug (4) entlang einer zweiten seitlichen Richtung (Y) auf dem dreidimensionalen Gitter (4) zu bewegen, wobei die zweite seitliche Richtung (Y) senkrecht zu der ersten seitlichen Richtung (X) ist, und
ein Rollmittelverschiebungssystem (41, 42), das angeordnet ist, um die ersten Rollmittel (14) in einer vertikalen Richtung (Z), die senkrecht zu der ersten und der zweiten seitlichen Richtung (X, Y) ist, zwischen einer in Bezug auf die vertikale Position der zweiten Rollmittel (15) abgesenkten Position, in der die ersten Rollmittel (14) das darunterliegende dreidimensionalen Gitter (4) berühren, und einer in Bezug auf die vertikale Position der zweiten Rollmittel (15) angehobenen Position, in der die zweiten Rollmittel (15) das darunterliegende dreidimensionalen Gitter (4) berühren, zu verschieben,
**dadurch gekennzeichnet, dass** jedes Behälterhandhabungsfahrzeug (9) ferner Folgendes umfasst:
ein erstes Spurrad (30a), das drehbar mit dem Rollmittelverschiebungssystem (41, 42) verbunden ist, eine Drehachse aufweist, die parallel zu der zweiten seitlichen Richtung (Y) ist, sodass ein unterster Teil des ersten Spurrads (30a) während des Gebrauchs zu jeder Zeit auf einen untersten Teil der ersten Rollmittel (14) ausgerichtet ist, und
ein erstes Positionsmesssystem (33, 35), das wenigstens indirekt mit dem ersten Spurrad (30a) gekoppelt ist, um dessen Winkelpositionsdaten zu erfassen, und
ein drehbar mit dem Fahrzeugaufbau (13) verbundenes zweites Spurrad (30b) mit einer Drehachse, die parallel zu der ersten Richtung (X) ist, sodass ein unterster Teil des zweiten Spurrads (30b) während des Gebrauchs zu jeder Zeit auf einen untersten Teil der zweiten Rollmittel (15) ausgerichtet ist, und
ein zweites Positionsmesssystem (33, 35), das mit dem zweiten Spurrad (30a) gekoppelt ist, um dessen Winkelpositionsdaten zu erfassen,
wobei das erste Spurrad (30a) zwischen den Antriebsrädern von wenigstens einem der zwei ersten Paare von Antriebsrädern angeordnet ist und das zweite Spurrad (30b) zwischen den Antriebsrädern von wenigstens einem der zwei zweiten Paare von Antriebsrädern angeordnet ist, und
jedes von dem ersten und dem zweiten Positionsmesssystem einen Codierer (34), der drehbar in dem ersten bzw. dem zweiten Spurrad (30a, 30b) angeordnet ist, und einen Spurradsensor (33) umfasst, der in Signalkommunikation mit dem Codierer (34) angeordnet ist, um Codiererübertragungssignale zu lesen, die Ringpositionsdaten des jeweiligen ersten und zweiten Spurrads (30a, 30b) enthalten.

7. Automatisiertes Lager- und Entnahmesystem nach Anspruch 6, **dadurch gekennzeichnet, dass** die vertikale Position der ersten Rollmittel (14) und des ersten Spurrads (30a) aufeinander ausgerichtet sind, sodass beide das darunterliegende dreidimensionale Gitter (4) berühren, wenn die ersten Rollmittel (14) in der unteren Position sind.

8. Automatisiertes Lager- und Entnahmesystem nach Anspruch 6 oder 7, **dadurch gekennzeichnet, dass** jedes Behälterhandhabungsfahrzeug (9) nach einem der Ansprüche 2 bis 5 ausgebildet ist.

## Revendications

1. Véhicule de manutention de conteneurs (9) pour manipuler des conteneurs de stockage dans un système de stockage et de récupération automatique, comprenant :
un corps de véhicule (13),
une cavité agencée de manière centrale dans le corps de véhicule (13), la cavité étant configurée pour recevoir et enfermer complètement un conteneur de stockage de taille maximum (6) prévu pour être pris d'une grille tridimensionnelle (4) sous-jacente,
des premiers moyens de roulement (14) comprenant deux premières paires de roues d'entraînement agencées sur les côtés opposés de et raccordées, en rotation, au corps de véhicule (13) et configurées pour déplacer le véhicule (9) le long d'une première direction latérale (X),
des seconds moyens de roulement (15) comprenant deux secondes paires de roues d'entraînement agencées sur les côtés opposés de et raccordées, en rotation, au corps de véhicule (13) et configurées pour déplacer le véhicule (4) le long d'une seconde direction latérale (Y), la seconde direction (Y) étant perpendiculaire à la première direction (X), et
un système de déplacement de moyens de roulement (41, 42) agencé pour déplacer les premiers moyens de roulement (14) dans une direction verticale (Z) perpendiculaire aux première et seconde directions latérales (X, Y), entre une position abaissée positionnée plus bas que la position verticale des seconds moyens de roulement (15) et une position relevée positionnée plus haut que la position verticale des seconds moyens de roulement (15),
**caractérisé en ce que** le véhicule de manutention de conteneurs (9) comprend en outre :
un premier galet (30a) raccordé, en rotation, au système de déplacement de moyens de roulement (41, 42) ayant un axe de rotation parallèle à la seconde direction latérale (Y), de sorte que la partie la plus basse du premier galet (30a) est à tout moment alignée avec la partie la plus basse des premiers moyens de roulement (14) pendant l'utilisation, et
un premier système de mesure de position (33, 35) au moins indirectement couplé au premier galet (30a) pour l'acquisition de ses données de positionnement angulaire, et
un second galet (30b) raccordé, en rotation, au corps de véhicule (13) avec un axe de rotation parallèle à la première direction (X) de sorte que la partie la plus basse du second galet (30b) est à tout moment alignée avec la partie la plus basse des seconds moyens de roulement (15) pendant l'utilisation, et
un deuxième système de mesure de position (33, 35) couplé au second galet (30a) pour l'acquisition de ses données de positionnement angulaire,
dans lequel le premier galet (30a) est agencé entre les roues d'entraînement d'au moins l'une des deux premières paires de roues d'entraînement et le second galet (30b) est agencé entre les roues d'entraînement d'au moins l'une des deux secondes paires de roues d'entraînement, et
chacun des premier et second systèmes de mesure de positionnement comprend :
un encodeur (34) agencé, en rotation, dans les premier et second galets (30a, 30b) respectivement, et un capteur de galet (33) agencé en communication de signal avec l'encodeur (34) pour lire les signaux de transmission d'encodeur contenant des données de positionnement annulaire des premier et second galets (30a, 30b).

2. Véhicule de manutention de conteneurs (9) selon la revendication 1, **caractérisé en ce que** le dispositif de manutention de conteneurs (9) est configuré de sorte que le premier galet (30a) est verticalement déplaçable par rapport aux seconds moyens de roulement (15).

3. Véhicule de manutention de conteneurs (9) selon la revendication 1, **caractérisé en ce que** le premier galet (30a) est raccordé, en rotation, au système de déplacement de moyens de roulement (41, 42) via un support de capteur (32) dans lequel le capteur de galet (33) est agencé.

4. Véhicule de manutention de conteneurs (9) selon la revendication 3, **caractérisé en ce que** le support de capteur (32) a une forme allongée ayant une extrémité longitudinale raccordée, en rotation, au niveau de l'axe de rotation du premier galet (30a) et l'autre extrémité longitudinale au moins indirectement raccordée au corps de véhicule (13).

5. Véhicule de manutention de conteneurs (9) selon l'une quelconque des revendications précédentes, **caractérisé en ce qu'**un troisième système de mesure de position est couplé au moins à l'un parmi les premiers moyens de roulement (14) et les seconds moyens de roulement (15) pour l'acquisition de ses données de position angulaire.

6. Système de stockage et de récupération automatique comprenant :
une grille tridimensionnelle (4) comprenant une pluralité de colonnes de stockage (5) configurées pour stocker des conteneurs de stockage (6) l'un au-dessus de l'autre dans des piles verticales (7), et
une pluralité de véhicules de manutention de conteneurs (9) agencés sur la grille tridimensionnelle (4) pour récupérer des conteneurs de stockage (6) de, et stocker des conteneurs de stockage (6) dans les colonnes de stockage (5) et pour transporter les conteneurs de stockage (6) horizontalement sur la grille (4), dans lequel chaque véhicule de manutention de conteneurs (9) comprend :
un corps de véhicule (13),
une cavité agencée de manière centrale dans le corps de véhicule (13), la cavité étant configurée pour recevoir et enfermer complètement un conteneur de stockage de taille maximum (6) prévu pour être pris de la grille tridimensionnelle (4) sous-jacente,
des premiers moyens de roulement (14) comprenant deux premières paires de roues d'entraînement agencées sur les côtés opposés de, et raccordées, en rotation, au corps de véhicule (13) et configurées pour déplacer le véhicule (9) le long d'une première direction latérale (X) sur la grille tridimensionnelle (4),
des seconds moyens de roulement (15) comprenant deux secondes paires de roue d'entraînement agencées sur les côtés opposés de, et raccordées, en rotation, au corps de véhicule (13) et configurées pour déplacer le véhicule (4) le long d'une seconde direction latérale (Y) sur la grille tridimensionnelle (4), la seconde direction latérale (Y) étant perpendiculaire à la première direction latérale (X), et
un système de déplacement de moyens de roulement (41, 42) agencé pour déplacer les premiers moyens de roulement (14) dans une direction verticale (Z) perpendiculaire aux première et seconde directions latérales (X, Y) entre une position basse par rapport à la position verticale des seconds moyens de roulement (15) dans laquelle les premiers moyens de roulement (14) sont en contact avec la grille tridimensionnelle (4) sous-jacente et une position relevée par rapport à la position verticale des seconds moyens de roulement (15) dans laquelle les seconds moyens de roulement (15) sont en contact avec la grille tridimensionnelle (4) sous-jacente,
**caractérisé en ce que** chaque véhicule de manutention de conteneurs (9) comprend en outre :
un premier galet (30a) raccordé, en rotation, au système de déplacement de moyens de roulement (41, 42) ayant un axe de rotation parallèle à la seconde direction latérale (Y), de sorte que la partie la plus basse du premier galet (30a) est à tout moment alignée avec la partie la plus basse des premiers moyens de roulement (14) pendant l'utilisation, et
un premier système de mesure de position (33, 35) au moins indirectement couplé au premier galet (30a) pour l'acquisition de ses données de positionnement angulaire, et
un second galet (30b) raccordé, en rotation, au corps de véhicule (13) avec un axe de rotation parallèle à la première direction (X) de sorte que la partie la plus basse du second galet (30b) est à tout moment alignée avec la partie la plus basse des seconds moyens de roulement (15) pendant l'utilisation, et
un deuxième système de mesure de position (33, 35) couplé au second galet (30a) pour l'acquisition de ses données de positionnement angulaire,
dans lequel le premier galet (30a) est agencé entre les roues d'entraînement d'au moins l'une des deux premières paires de roues d'entraînement et le second galet (30b) est agencé entre les roues d'entraînement d'au moins l'une des deux secondes paires de roues d'entraînement, et
chacun des premier et second systèmes de mesure de positionnement comprend :
un encodeur (34) agencé, en rotation, dans les premier et second galets (30a, 30b) respectivement, et un capteur de galet (33) agencé en communication de signal avec l'encodeur (34) pour lire les signaux de transmission d'encodeur contenant des données de positionnement annulaire des premier et second galets (30a, 30b).

7. Système de stockage et de récupération automatique selon la revendication 6,
**caractérisé en ce que** la position verticale des premiers moyens de roulement (14) et le premier galet (30a) sont alignés de sorte que tous deux sont en contact avec la grille tridimensionnelle (4) sous-jacente lorsque le premier moyen de roulement (14) est dans la position basse.

8. Système de stockage et de récupération automatique selon les revendications 6 ou 7,
**caractérisé en ce que** chaque véhicule de manutention de conteneurs (9) est selon l'une quelconque des revendications 2 à 5.
